# EUROPEAN PATENT SPECIFICATION

(11) **EP 1 172 831 B1**
(45) Date of publication and mention of the grant of the patent: **24.10.2012**
(21) Application number: 01000267.3
(22) Date of filing: 03.07.2001
(51) Int. Cl.: G06F 3/045, H01H 13/702, H01H 13/785

(54) **Switch with at least one flexible conductive member**
Schalter mit mindestens einem flexiblen leitenden Element
Commutateur avec au moins un élément conducteur flexible

(30) Priority: 12.07.2000 EP 00202444; 12.07.2000 US 614290
(43) Date of publication of application: 16.01.2002
(73) Proprietor: Agfa-Gevaert N.V., 2640 Mortsel (BE); Elo Touch Solutions, Inc., Menlo Park, CA 94025 (US)
(72) Inventor: Welsh, Laurence M., San Carlos, CA 94070 (US); Radzilowski, Leonard H., Mountain View, CA 94043 (US); Cloots, Tom, c/o AGFA-GEVAERT, Corp. IP Dept. 3800, 2640 Mortsel (BE); Muys, Bavo, c/o AGFA-GEVAERT, Corp. IP Dept. 3800, 2640 Mortsel (BE); Willaert, Peter, AGFA-GEVAERT, Corp. IP Dept. 3800, 2640 Mortsel (BE)
(74) Representative: Goedeweeck, Rudi

(56) References cited:
- EP-A- 0 128 529
- EP-A- 1 013 413
- WO-A-96/39707
- US-A- 4 444 998
- US-A- 5 177 330
- US-A- 5 220 136
- PATENT ABSTRACTS OF JAPAN vol. 1999, no. 09, 30 July 1999 (1999-07-30) & JP 11 105417 A (OIKE IND CO LTD), 20 April 1999 (1999-04-20)

## Description

### Field of the invention:

The present invention relates generally to switches. More specifically, the present invention relates to switches of the sort in which two conductive surfaces touch, such as in membrane switches and resistive touchscreens.

### Background of the invention:

Switches of the sort in which two conductive surfaces touch are used in such technologies as resistive touchscreens and membrane switches. For reasons of convenience and clarity, this background section describes touchscreens.

Touchscreens are used in the computer arts to input data. Rather than a user of a computer inputting data by using a keyboard or a mouse, the user inputs data via a touchscreen mounted on the monitor of the computer. US 4,306,110; US 5,438,168; US 5,541,370; US 5,589,857; US 5,818,430; and US 5,840,175 disclose resistive touchscreens.

The basic configuration of a resistive touchscreen comprises a first flexible substrate (coversheet) and a second substrate to which the coversheet is bonded. The first substrate typically comprises a thin layer of a plastic, such as poly(ethylene terephthalate) (PET). The first substrate has opposed first and second surfaces, the first surface facing a user of the computer and the second surface facing the second substrate. The second surface of the first substrate is conductive e.g. by coating with a conductive element. The second substrate generally comprises glass, although other transparent plastic materials could be used, and is either flat or curved to fit the curvature of a computer monitor. The second substrate has a conductive surface e.g. by coating with a conductive element facing the first substrate, and thus also facing a user of the computer.

The conductive elements typically are transparent conductive coatings of thin layers of metals or metal oxides such as indium tin oxide (ITO), although other metals or metal oxides could be used. The composition and application of ITO coatings are described in US 5,776,373; US 5,851,642; and US 6,042,752.

The touchscreen typically also comprises a plurality of spacer dots applied to the conductive coating on one of the facing surfaces, either of the coversheet (first substrate) or of the second substrate. Spacer dots are described in US 5,220,136, although other spacer dots could also be used. These spacer dots separate the coversheet (first substrate) from the second substrate. Touching the coversheet presses the two conductive surfaces, one on the coversheet (first substrate) and one on the second substrate, together and thereby completes an electrical circuit that also comprises conductive elements such as wires on the edges of the conductive surfaces. The specific location that is touched, and thus the location of the conductive surfaces that come into contact, is the data created and transmitted by the touch.

EP-A 0 128 529 discloses a pressure switch with two contact elements, which are arranged electrically separately from one another and are provided with connections, and additionally an electrically conductive bridging element, which is electrically insulated from one or both of these contact elements and is capable of being brought into contact with this or these by applying pressure, characterized in that the bridging element comprises an electrically conductive pyrrole polymer.

A problem with traditional touchscreens is the interrelationship between the mechanical properties of the flexible sheet of the coversheet (first substrate) and the conductive surface of the first substrate. The traditional materials used for the conductive surface are generally brittle and can crack and disbond from the flexible plastic sheet of the first substrate when it is deformed repeatedly. This in turn destroys the continuity of the electrical current carrying pathways in the conductive surface, which in turn results in failure of the touchscreen to accurately report the location of a touch. What is needed is a conductive surface that is flexible and durable and will bond to the flexible sheet for the life of the switch. When used in touchscreens, the conductive surface also needs to be transparent.

In addition to the aforementioned shortcomings of metal and metal oxide coatings, ITO coatings have a limited lifespan, i.e. they fail to transmit the requisite electrical current after a number of touches. ITO coatings are also relatively expensive and have low resistance to mechanical damage. What is needed is a transparent conductive coating that has a longer lifespan, a low cost, and is resistant to mechanical damage.

WO96/39707 discloses a switch for a touchscreen comprising a conductive surface arranged on a flexible substrate, which is touched by a user, and a conductive surface arranged on a second substrate, said conductive substrates facing each other so as to contact when the flexible substrate is touched by the user. The flexible substrate comprises an intrinsic conducting polymer which may be polythiophene.

### Aspects of the invention:

It is an aspect of the present invention to provide a switch wherein the conductive surface is inexpensive and has improved mechanical properties, i.e. is not brittle and which bonds to the flexible sheet of the first substrate even after long use.

It is a further aspect of the present invention to provide touchscreens with an increased lifespan.

Further aspects and advantages of the invention will become apparent from the description hereinafter.

### Summary of the invention:

The present invention solves the above problems by changing both the material used in the transparent conductive surface of the first substrate (coversheet) and the electrical characteristics of the electrical circuit.

In a first improvement over traditional touchscreen technology, the present invention uses a layer of an intrinsically conductive polymer as the coating on the flexible plastic sheet of the first substrate (coversheet). Intrinsically conductive polymer coatings on flexible plastic sheets are less brittle, more flexible to mechanical damage, and available at lower cost than ITO coatings on plastic sheets of first substrates (coversheets). Furthermore, by coating the plastic sheet with an intrinsically conductive polymer coating rather than a metallic coating, the coating does not crack or disbond from the plastic sheet of the first substrate (coversheet), and thus has a longer life. It has been discovered by the present inventors that, although the above switch is not liable to mechanical damage after long use, its lifetime may be limited when only one of the conductive coatings comprises an intrinsically conductive polymer and the other essentially consists of metal or metal oxide such as ITO. In order to enjoy the benefits of the improved mechanic properties of intrinsically conductive coatings over metal or metal oxide coatings it has been surprisingly discovered that it is necessary to control carefully the excitation of the electric circuit used with touchscreens incorporating intrinsically conductive polymers. This careful control of the excitation of the electric circuit is not required with conventional metal or metal oxide coatings such as ITO, and does not provide any additional advantage for these conventional materials. In particular, both the level of the excitation voltage and the polarity of the voltage applied to the intrinsically conductive polymer coating must be carefully controlled to maximize the benefit of the improved mechanical properties pf the intrinsically conductive polymer coatings. The excitation voltage of the touchscreen must be reduced from the 5 volts DC that is commonly used with many commercially available touchscreens. The same effect is also observed with AC voltage. Additionally, the durability of the touchscreen is significantly improved when the intrinsically conductive polymer coating is held at a DC voltage. These surprising effects are not observed with conventional metal or metal oxide coatings.

Aspects of the present invention are realized by an electrical circuit as in claim 1

Aspects of the present invention are also realized by an electrical device comprising the above-disclosed electrical circuit.

Aspects of the present invention are also realized by a touchscreen comprising the above-disclosed electrical circuit.

Aspects of the present invention are also realized by a keyboard comprising the above-disclosed electrical circuit.

Preferred embodiments of the electrical circuit according to the present invention are defined in the dependent claims.

### Description of the drawings:

Figure 1 is a chart showing the voltage, V, across resistor R1 as a function of the number of touches, T, of Experiment 1 performed with the test device of Figure 8 with a circuit voltage of 5V and the coversheet (first substrate) having a positive polarity.
Figure 2 is a chart showing the voltage, V, across resistor R1 as a function of the number of touches, T, of Experiment 2 performed with the test device of Figure 8 with a circuit voltage of 5V and the coversheet (first substrate) having a negative polarity.
Figure 3a and Figure 3b are charts showing the voltage, V, across resistor R1 as a function of the number of touches, T, of Experiment 3 performed with the test device of Figure 8 with a circuit voltage of 0.5V and the coversheet (first substrate) having a positive polarity.
Figure 4a and Figure 4b are charts showing the voltage, V, across resistor R1 as a function of the number of touches, T, of Experiment 4 performed with the test device of Figure 8 with a circuit voltage of 0.5V and the coversheet (first substrate) having a positive polarity.
Figure 5 is a chart showing the voltage, V, across resistor R1 as a function of the number of touches, T, of Experiment 5 performed with the test device of Figure 8 with a circuit AC voltage of 5V and 60 Hz.
Figure 6 is a chart showing the voltage, V, across resistor R1 as a function of the number of touches, T, of Experiment 6 performed with the test device of Figure 8 with a circuit AC voltage of 0.5V and 60 Hz.
Figure 7 is a schematic diagram of a touchscreen in accordance with the present invention.
Figure 8 is a schematic diagram of a circuit device used in accordance with the present invention.

### DETAILED DESCRIPTION

### Definitions

A first substrate being flexible and having a conductive surface, according to the present invention, is also indicated when the term coversheet is used.

### Switch

The switch of the present invention comprises a first and a second substrate. The first substrate (coversheet) of the switch comprises a flexible support (first support) and an intrinsically conductive substituted or unsubstituted polythiophene, is flexible and has a conductive surface. The second substrate of the switch comprises a support (second support) and has a conductive surface.

According to a first embodiment of the switch of the present invention, wherein the conductive surfaces of the first and second substrates are mutually spaced apart and face one another, such that upon touching the first substrate the conductive surface thereof and the conductive surface of the second substrate are capable of being pressed together to realize an electrical contact.

According to a second embodiment of the switch of the present invention, a first terminal extends from the conductive surface of the first substrate, and a second terminal extends from the conductive surface of the second substrate, the first terminal forming an electrical circuit such that the circuit is completed when movement of the first substrate brings the conductive surface of the first substrate into contact with the conductive surface of the second substrate.

According to an third embodiment of the switch of the present invention, an electrical circuit comprising a voltage source for applying a voltage difference between the surface layer of the first substrate and the surface layer of the second substrate is completed when the first substrate is touched such that the surface layer of the first substrate and the surface layer of the second substrate are pressed together.

According to a fourth embodiment of the switch of the present invention, the polarity of the conductive layer of the first substrate is negative relative to the conductive surface of the second substrate.

According to a fourth embodiment of the switch according to the present invention, the conductive surface of the second substrate is a conventional inorganic conductive coating such as ITO.

According to a fifth embodiment of the switch of the present invention, the switch further comprises a plurality of spacer dots disposed on the conductive surface of the first substrate or the conductive surface of the second substrate.

According to a sixth embodiment of the switch of the present invention comprises:
a first substrate (coversheet) comprising a first support and a first conductive coating applied to a first surface of the first support, the first conductive coating comprising an intrinsically conductive substituted or unsubstituted thiophene; and a second substrate comprising a second support and a second conductive coating applied to a first surface of the second support;
wherein the first and second substrates are positioned such that the first and second conductive coatings face each other and an electric potential of less than five volts is applied across the first and the second conductive coatings.

Other elements, such as tie-layers between the plastic sheet and conductive polymer layer of the first substrate (coversheet) to improve adhesion (not shown), may also be used with the present invention.

### First substrate of the switch

The first substrate (coversheet) of the switch of the present invention comprises a flexible support (first support) and an intrinsically conductive substituted or unsubstituted polythiophene, is flexible and has a conductive surface. Furthermore, the conductive surface of the first substrate comprises an intrinsically conductive substituted or unsubstituted polythiophene.

The intrinsically conductive substituted or unsubstituted polythiophene of the first substrate can be provided by standard coating techniques or lamination. The flexible support (first support) of the first substrate used in the present invention is preferably a plastic sheet such as poly(ethylene terephthalate), poly(ethylene naphthalate), polystyrene, polyethersulphone, polycarbonate, polyacrylate, polyamide, polyimide, cellulosetriacetate, polyolefins, polyvinylchloride and other plastics having similar characteristics, which is optionally provided with a subbing layer.

According to a preferred embodiment of the present invention, the conductive surface of the first substrate is the conductive surface of a conductive coating i.e. the first substrate comprises a support (first support) and a conductive coating.

A flexible glass/plastic laminate such as described in WO 99/21707, WO 99/21708 and EP-A 1 013 413 provided with a conductive coating can also be used as the first substrate of the switch of the present invention.

The first substrate is preferably substantially transparent i.e. is characterized by a white light transmission of at least 80%, more preferably at least 90% and most preferably at least 95%.

The side opposite to the conductive coating of the first substrate can be provided with additional layers such as an anti-glare layer or a scratch-resistant hardcoat layer.

### Second substrate of the switch

The second substrate of the switch of the present invention comprises a support (second support) and has a conductive surface. The support (second support) of the second substrate is not required to be flexible and may be an inorganic substrate such as a ceramic or glass, although other transparent materials such as plastics may also be used.

According to a preferred embodiment of the present invention, the conductive surface of the second substrate is the conductive surface of a conductive coating i.e. the second substrate comprises a support (second support) and a conductive coating.

The second substrate may be flat or curved e.g. to fit the curvature of a computer monitor screen. The conductive surface of the second substrate can be indium tin oxide (ITO) or of other transparent metal or metal oxide coatings or of an intrinsically conductive polymer. The side opposite to the conductive coating of the second substrate can be provided with additional layers such as an anti-glare layer or a scratch-resistant hardcoat layer.

### Electrical circuit

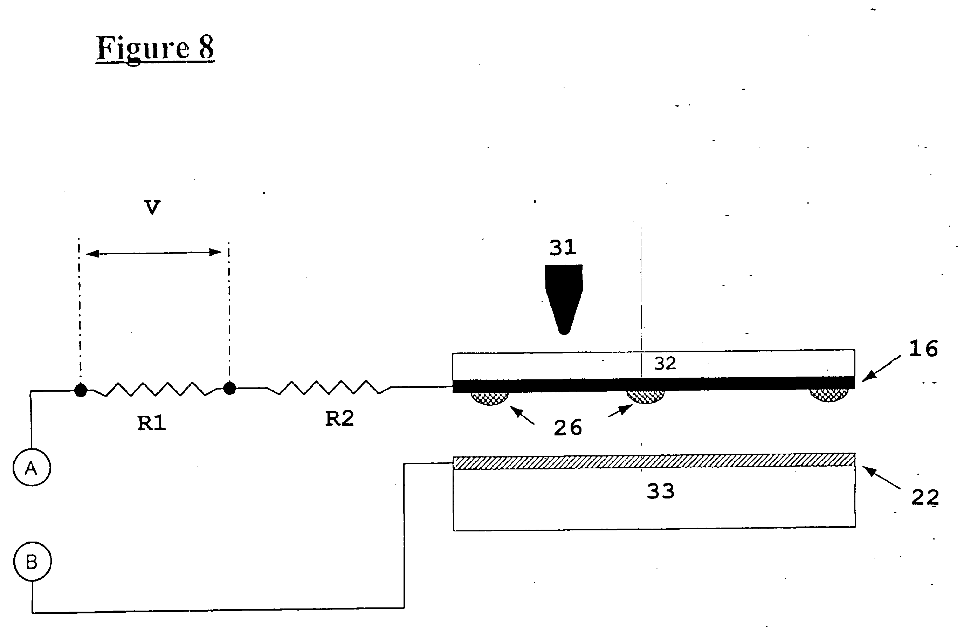

An electrical circuit, according to the present invention, comprising the above-disclosed switch and a voltage source for applying a voltage difference between the conductive surface of the first substrate and the conductive surface of the second substrate. Such an electrical circuit is shown in Figure 8.

According to a first embodiment of the electrical circuit of the present invention, the voltage source is an AC voltage source.

According to a second embodiment of the electrical circuit of the present invention, the voltage source is a DC voltage source and wherein the conductive surface of the first substrate is connected to the negative polarity of the DC voltage source.

According to a third embodiment of the electrical circuit of the present invention, wherein the voltage difference is less than five volts.

According to a fourth embodiment of the electrical circuit of the present invention, wherein the voltage difference is less than three volts.

According to a fifth embodiment of the electrical circuit of the present invention, wherein the voltage difference is less than one volt.

### Touchscreen

A touchscreen comprising the switch, according to the present invention, or the electrical circuit, according to the present invention.

According to a first example when using the switch of the present invention as a component of a touchscreen, a switch is preferred wherein the first substrate and the second substrate are substantially transparent, i.e. are each characterized by a white light transmission of at least 80%, more preferably at least 90% and most preferably at least 95%.

According to a second example, the touchscreen comprises:
a first substrate (coversheet) comprising a first support, the first support comprising a plastic;
a second substrate spaced apart from the first substrate;
a first conductive coating on the first support, the first conductive coating having opposed surfaces, one of the opposed surfaces of the first conductive coating facing the first support, the other of the opposed surfaces of the first conductive coating facing the second substrate, the first conductive coating comprising an intrinsically conductive substituted or unsubstituted polythiophene;
a second conductive coating on the second support, the second conductive coating spaced apart from the first conductive coating, the second conductive coating having a surface facing the first conductive coating and spaced apart therefrom; and
a plurality of spacer dots,
   wherein:
the plurality of spacer dots are disposed on the first conductive coating or the second conductive coating on the surface thereof facing the other of the conductive coatings, the spacer dots spaced apart from the other of the conductive coatings;
a first terminal extending from the first conductive coating;
a second terminal extending from the second conductive coating; and
the first terminal, the first conductive coating, the second conductive coating, and the second terminal form an electrical circuit such that the electrical circuit is completed for transmission of an electrical signal to a receiving medium when the first conductive coating and the second conductive coating are pressed together.

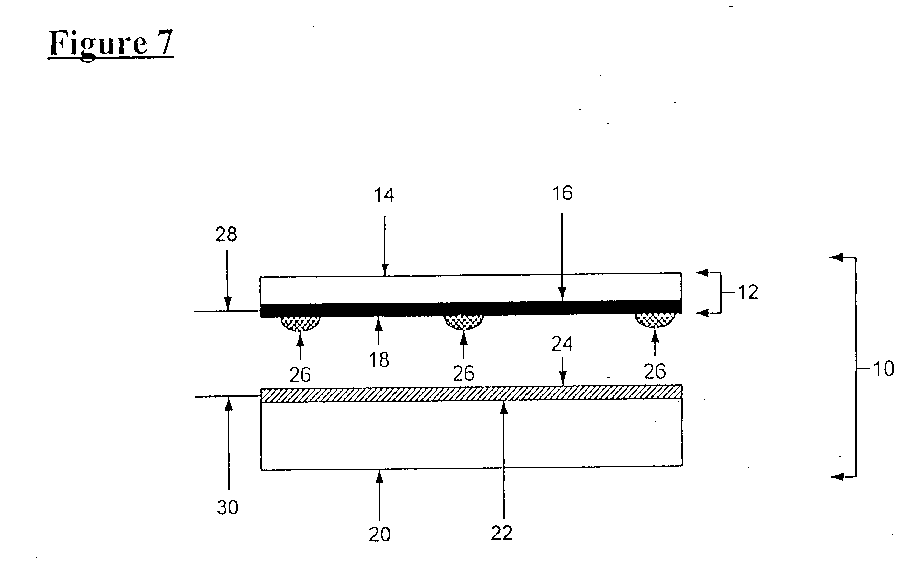

Figure 7 shows a touchscreen 10 according to the present invention. The first substrate (coversheet) 12 comprises a transparent polyethylene terephthalate (PET) sheet 14 and a conductive coating 16 disposed thereon. The conductive coating 16 has a conducting surface 18 facing away from the PET sheet 14. The conductive coating 16 of the first substrate comprises an intrinsically conductive polymer and is transparent.

The touchscreen 10 shown in Figure 7 further comprises a second substrate 20. The second substrate 20 comprises a support and a conductive coating 22, which has a conductive surface 24 facing toward the conductive coating 16 of the first substrate and spaced apart therefrom. The conductive coating of the second support is made of ITO.

The touchscreen 10 further comprises a plurality of spacer dots 26 of a type well known to the skilled artisan. The plurality of spacer dots 26 are disposed on the conductive surface 18 of the conductive coating 16 of the first substrate, facing the conductive surface 24 of the conductive coating 22 of the second substrate and spaced apart therefrom; alternatively, the spacer dots 26 may be disposed on the conductive surface 24 of the conductive coating 22 of the second substrate facing the conductive surface 18 of the conductive coating 16 of the first substrate and spaced apart therefrom.

The touchscreen 10 further comprises a plurality of conductive elements electrically connected to the conductive coatings 16 and 22 to form an electrical circuit when the conductive coatings are in contact with each other. Wire 28 connects the first conductive coating 16 to a power source (not shown) within a computer monitor (not shown); similarly, wire 30 connects the second conductive coating 22 to a receiving medium (not shown) within the computer monitor (not shown). Many alternative configurations of conductive elements are possible, such as those described in US 4,306,110; US 5,438,168; US 5,541,370; US 5,589,857; US 5,818,430; and US 5,840,175; each of these is incorporated by reference.

### Intrinsically conductive polymer

The intrinsically conductive polymers used in the present invention can be any intrinsically conductive polymer known in the art e.g. polyacetylene, polypyrrole, polyaniline, polythiophene, etc. Details about suitable intrinsically conductive polymers can be found in textbooks, such as "Advances in Synthetic Metals", ed. P. Bernier, S. Lefrant, and G. Bidan, Elsevier, 1999; "Intrinsically Conducting Polymers: An Emerging Technology", Kluwer (1993); "Conducting Polymer Fundamentals and Applications, A Practical Approach", P. Chandrasekhar, Kluwer, 1999; and "Handbook of Organic Conducting Molecules and Polymers", Ed. Walwa, Vol. 1-4, Marcel Dekker Inc. (1997).

According to a seventh embodiment of the switch of the present invention, the intrinsically conductive substituted or unsubstituted polythiophene has the following formula: 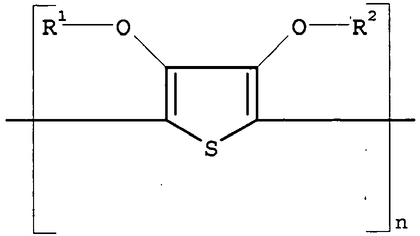 wherein n is larger than 1, preferably larger than 5, and each of R¹ and R² independently represents hydrogen or an optionally substituted C₁₋₄ alkyl group or together represent an optionally substituted C₁₋₄ alkylene group or an optionally substituted cycloalkylene group, preferably an ethylene group, an optionally alkyl-substituted methylene group, an optionally C₁₋₁₂ alkyl- or phenyl-substituted ethylene group, a 1,3-propylene group or a 1,2-cyclohexylene group. A highly preferred substituted polythiophene is poly(3,4-ethylenedioxythiophene) (PEDOT), described in US 5,766,515 and EP-A 686 662, which are incorporated by reference.

The conductive surface layers of the first and second substrates can be obtained by applying a coating solution or dispersion comprising the intrinsically conductive polymer using known coating methods, e.g. spin coating, dip coating, rod coating, blade coating, air knife coating, gravure coating, reverse roll coating, extrusion coating, slide coating and curtain coating. The coated solution or dispersion can be dried and cured using known methods. An overview of these coating techniques can be found in "Modern Coating and Drying Technology", Edward Cohen and Edgar B. Gutoff Editors, VCH publishers, Inc., New York (1992). The conductive coating thus obtained preferably has a surface resistivity < 50000 Ω/square.

The preparation of intrinsically conductive polythiophene and aqueous dispersions containing such a polythiophene and a polyanion is described in EP-A 440 957 and corresponding US 5,300,575. The preparation of polythiophene proceeds in the presence of polymeric polyanion compounds by oxidative polymerization of 3,4-dialkoxy-thiophenes or 3,4-alkylenedioxythiophenes according to the following formula: 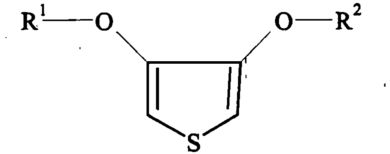 wherein R¹ and R² are as defined above.

Stable aqueous polythiophene solutions or dispersions can be obtained by dissolving thiophenes corresponding to the formula above, a polyacid and an oxidising agent in an organic solvent or preferably in water, optionally containing a certain amount of organic solvent, and then stirring the resulting solution or emulsion at 0°C to 100°C until the polymerization reaction is completed. The polythiophenes formed by the oxidative polymerization are positively charged, the location and number of such positive charges being not determinable with certainty and therefore not mentioned in the general formula of the repeating units of the polythiophene polymer.

The oxidising agents are those which are typically used for the oxidative polymerization of pyrrole, see e.g. J. Am. Soc. 85, 454 (1963). Preferred inexpensive and easy-to-handle oxidising agents are iron(III) salts, e.g. FeCl₃, Fe(ClO₄)₃ and the iron(III) salts of organic acids and inorganic acids containing organic residues. Other suitable oxidising agents are H₂O₂, K₂Cr₂O₇, alkali or ammonium persulfates, alkali perborates, potassium permanganate and copper salts such as copper tetrafluoroborate. Air or oxygen can also be used as oxidising agents. Theoretically, 2.25 equivalents of oxidising agent per mol of thiophene are required for the oxidative polymerization thereof (J. Polym. Sci. Part A, Polymer Chemistry, Vol. 26, p.1287, 1988). In practice, however, the oxidising agent is used in excess, for example, in excess of 0.1 to 2 equivalents per mol of thiophene.

The polyacid forms a polyanion or, alternatively, the polyanion can be added as a salt of the corresponding polyacids, e.g. an alkali salt. Preferred polyacids or salts thereof are polymeric carbonic acids such as poly(acrylic acid), poly[(meth)-acrylic acid] and poly(maleic acid) or polymeric sulphonic acids such as poly(styrene sulphonic acid) (PSS) or poly(vinyl sulphonic acid). Alternatively, copolymers of such carbonic and/or sulphonic acids and of other polymerizable monomers such as styrene or acrylates can be used. PSS is especially preferred. The molecular weight of these polyanion forming polyacids is preferably between 1000 and 2x10⁶, more preferably between 2000 and 5x10⁵. These polyacids or their alkali salts are commercially available and can be prepared according to the known methods, e.g. as described in Houben-Weyl, Methoden der Organische Chemie, Bd. E20 Makromolekulare Stoffe, Teil 2, (1987), pp. 1141.

The intrinsically conductive polymer solutions or dispersions thus obtained can then be used as basic ingredient of a coating solution or dispersion. The coating solution or dispersion can also comprise additional ingredients, such as one or more binders, one or more surfactants, spacing particles, UV-filters or IR-absorbers. Suitable polymer binders are described in EP-A 564 911. Such binders may be treated with a hardening agent, e.g. an epoxysilane as described in EP-A 564 911, which is especially suitable when coating on a glass substrate.

The intrinsically conductive polymer coating solution or dispersion preferably also comprises is a linear, branched or cyclic aliphatic C₂₋₂₀ hydrocarbon or an optionally substituted aromatic C₆₋₁₄ hydrocarbon or a pyran or a furan, the organic compound comprising at least two hydroxy groups or at least one -COX or -CONYZ group wherein X denotes -OH and Y and Z independently of one another represent H or alkyl; or a heterocyclic compound containing at least one lactam group. Examples of such organic compounds are N-methyl-2-pyrrolidone, 2-pyrrolidone, 1,3-dimethyl-2-imidazolidone, N,N,N',N'-tetramethylurea, formamide, dimethylformamide, and N,N-dimethylacetamide. Preferred examples are sugar or sugar derivatives such as arabinose, saccharose, glucose, fructose and lactose, or di- or polyalcohols such as sorbitol, xylitol, mannitol, mannose, galactose, sorbose, gluconic acid, ethylene glycol, di- or tri(ethylene glycol), 1,1,1-trimethylol-propane, 1,3-propanediol, 1,5-pentanediol, 1,2,3-propanetriol, 1,2,4-butanetriol, 1,2,6-hexanetriol, or aromatic di- or polyalcohols such as resorcinol.

### Industrial applications

The switch and the electrical circuit can be used in any electrical device, such as a keyboard comprising membrane switches. The most preferred device is a resistive touchscreen.

### EXAMPLES

A series of tests, described hereafter as Experiments 1 to 6 were carried out using the test device shown in Figure 8. This setup was configured by modifying a standard 26.4 cm (10.4 inch)-display incorporating an AccuTouch^{®} touchscreen, which is commercially available from Elo Touchsystems, Inc. of Fremont, California. The standard AccuTouch^{®} touchscreen configuration comprises a coversheet (first substrate) comprising a PET plastic sheet 32 coated with a transparent conductive coating 16 made of ITO and a glass support 33 coated with a transparent conductive coating 22 also made of ITO. The two transparent conductive coatings face each other and are spaced apart. Spacer dots were disposed on the coating of the coversheet (first substrate), facing, but not touching, the conductive coating of the glass screen.

The standard configuration described above was modified for these experiments by replacing the ITO of the transparent conductive coating of the coversheet (first substrate) with a coating of an intrinsically conductive polymer. The particular intrinsically conductive polymer used was PEDOT/PSS, which is commercially available as a coating on 175 micrometer thick polyethylene terephthalate film under the trade name ORGACON™EL3TG, of Agfa-Gevaert N.V., Mortsel, Belgium.

A pneumatic piston was mounted above the first substrate on the side opposite the conductive surface and applied a load of 340 g (twelve ounces) to a stylus at a frequency of three times per second. The stylus 31 was made from a hard plastic, specifically CYCOLAC™ T4500 ABS, which is commercially available from the General Electric Company. The tip radius of the stylus was 0.76 mm (0.030 inches). The tip was carefully positioned to strike the surface of the first substrate opposite to the conductive surface in the centre of an area defined by four of the plurality of spacer dots. When the stylus tip struck the first substrate, the conductive coatings on the first and second substrates of the touchscreen were pressed into contact, thus completing the electrical circuit. A 1000 ohm resistor R1 and a 9000 ohm resistor R2 were connected in series with the conductive coating of the first substrate as indicated in Figure 8. A data acquisition system was used to continuously monitor the voltage drop, V, across the resistor R1. The circuit also included a pair of input terminals A and B.

### Experiment 1

In this experiment a voltage potential of 5 volts DC was applied across the input terminals A and B; this voltage is commonly used in the touchscreen industry. The voltage of terminal A was positive with respect to terminal B, as taught in US 5,766,515. If the electrical contact made by touching the conductive surface of the first substrate and the conductive surface of the second substrate into contact is degraded, the current flow during each contact will decrease and cause a decrease in the voltage drop across the series resistance.

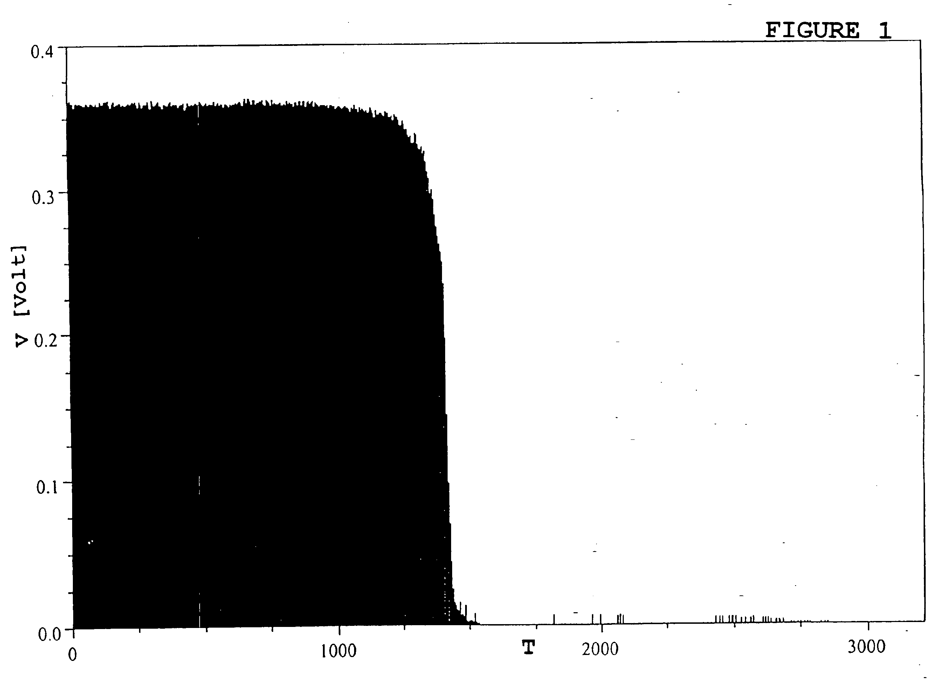

Touchscreen failure can occur when the electrical contact is degraded to the extent that an appropriate electrical circuit is not completed when the conductive surfaces are brought into contact. A fifty percent reduction in current, as indicated by a fifty percent decrease in the voltage drop across resistor R1, is a reasonable indication of touchscreen failure. Figure 1 shows that a fifty percent reduction in voltage, V, across resistor R1 was measured after approximately 1400 touches, T.

### Experiment 2

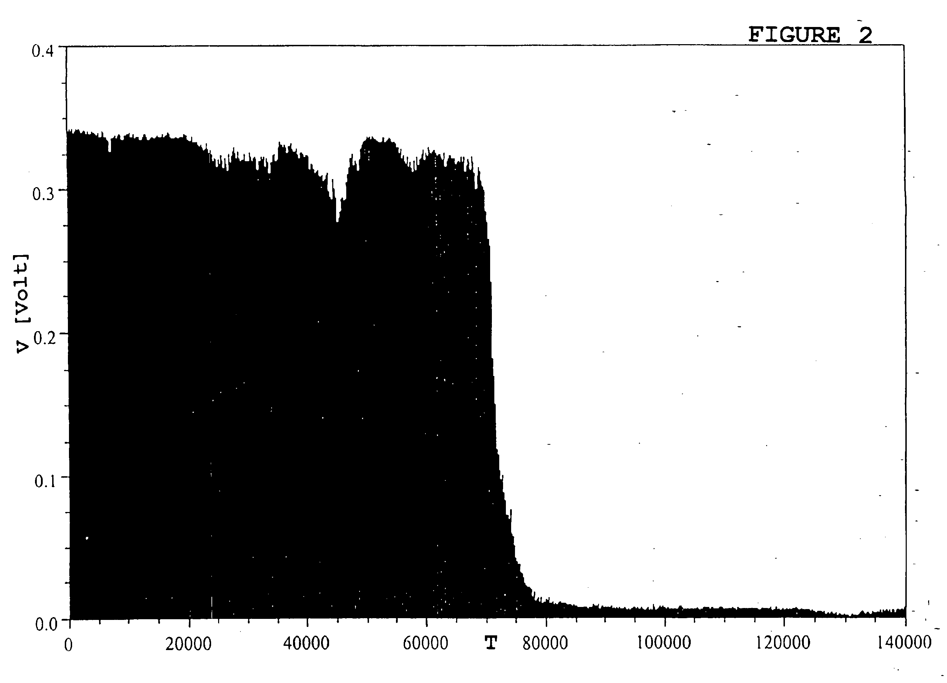

In experiment 2, a voltage potential of 5 volts DC was also applied across the input terminals A and B; however, the polarity, as compared to Experiment 1, was reversed i.e. terminal A had a negative voltage with respect to terminal B. Figure 2 shows that a fifty percent reduction in voltage, V, across resistor R1 was not measured until after approximately 80,000 touches, T, corresponding to a 57-fold improvement over Experiment 1.

### Experiment 3

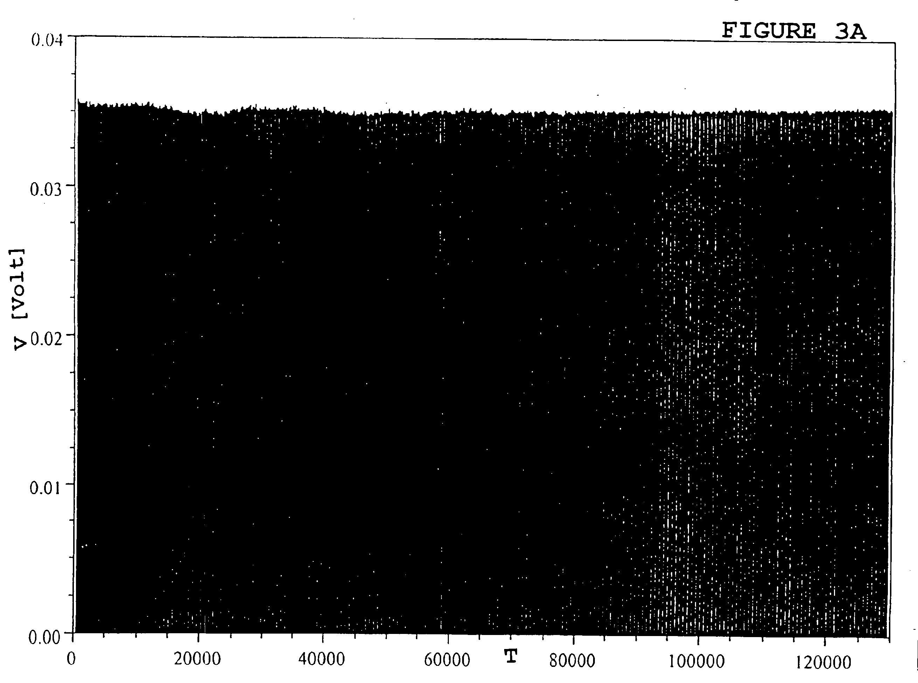

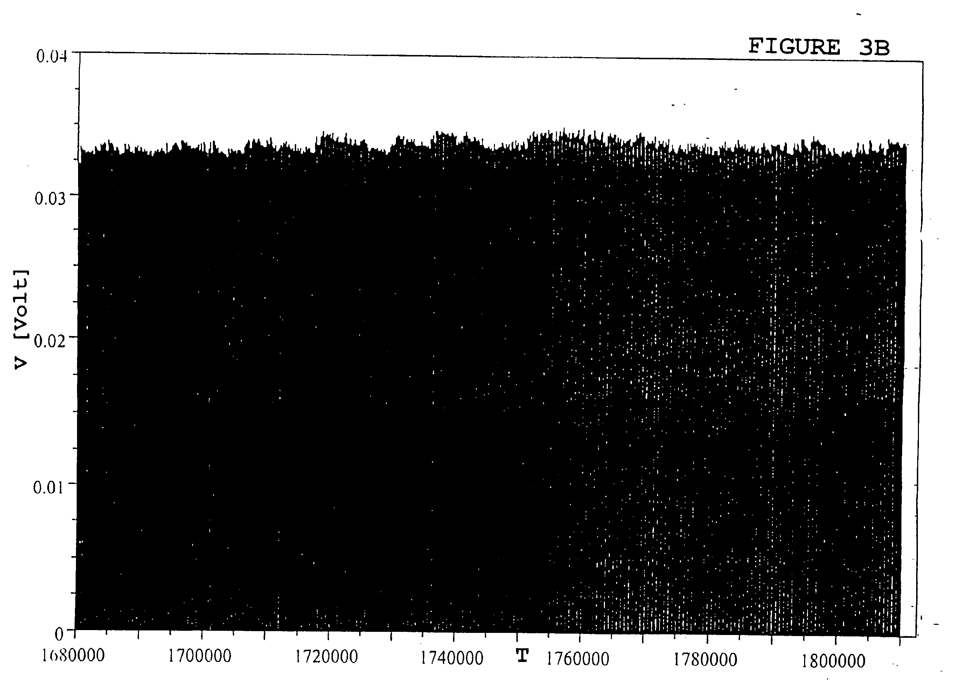

In experiment 3, terminal A again had a positive polarity, but the voltage potential across the input terminals A and B was reduced from 5 volts DC to 0.5 volt DC. Figure 3a shows that the voltage reduction, V, across resistor R1 was negligible after approximately 130,000 touches, T. The experiment continued for a total of approximately 1.81 million touches, T. Figure 3b shows that the voltage decrease across the last 120,000 touches, T, of the test was only a few percent lower than the original voltage, V, shown in Figure 3a. A fifty percent reduction in voltage, V, across resistor R1 was not measured during the entire experiment, which lasted for more than 1.81 million touches, T.

### Experiment 4

In experiment 4, terminal A again had a negative polarity (similar to Experiment 2), but the voltage potential across the input terminals A and B was reduced from 5 volts DC to 0.5 volt DC.

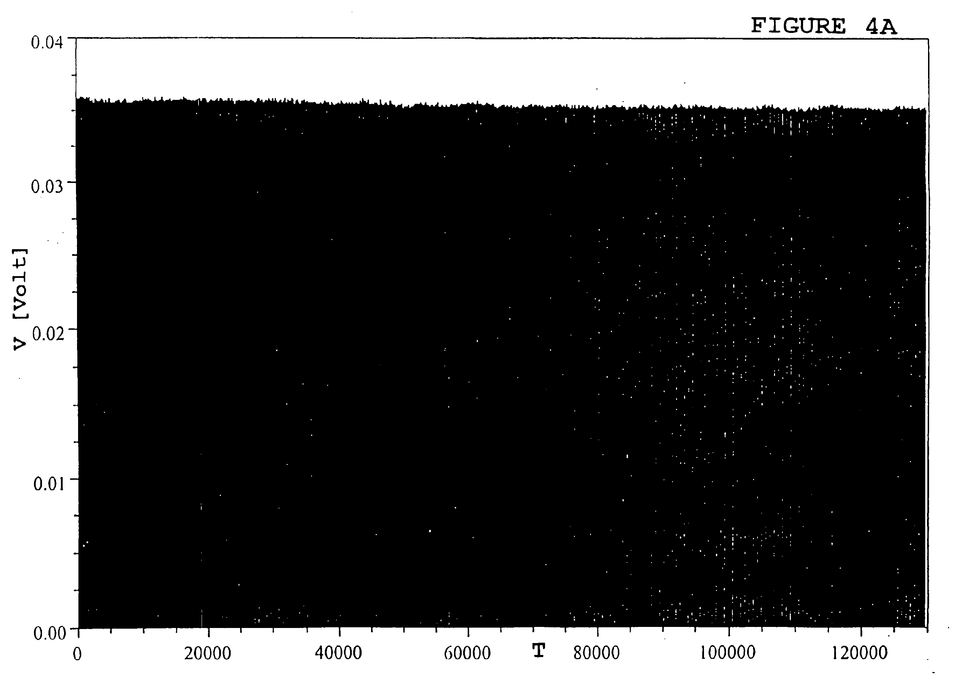

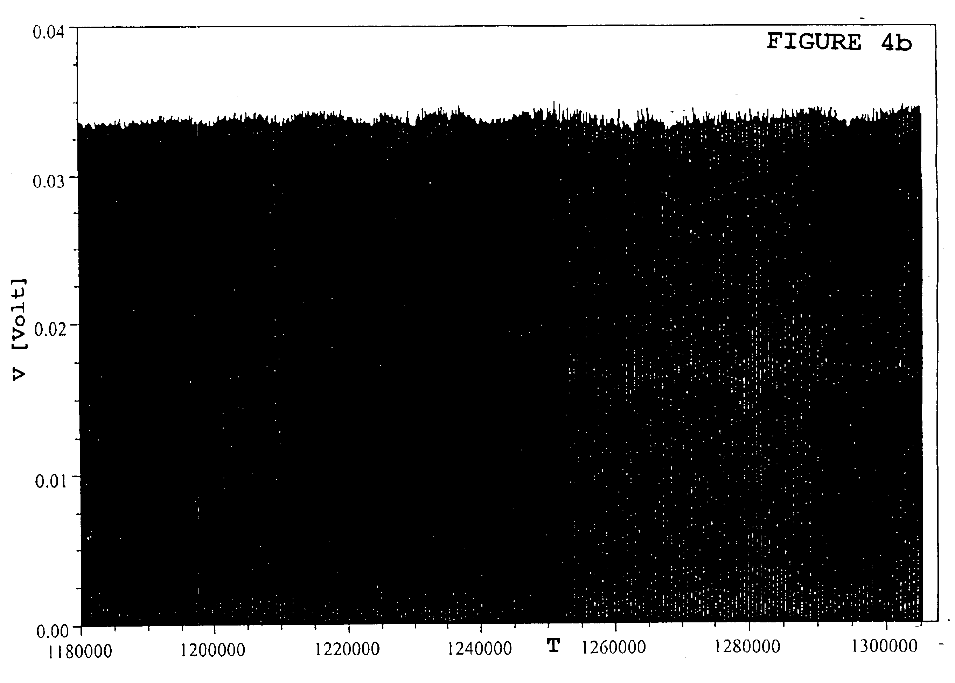

Figures 4a and 4b show that a fifty percent reduction in voltage, V, across resistor R1 was not measured during the entire experiment, which lasted for more than 1.3 million touches, T.

These experiments showed that, both reversing the polarity and reducing the DC voltage greatly increased the number of touches before the system fails. This was surprising and unexpected.

### Experiment 5

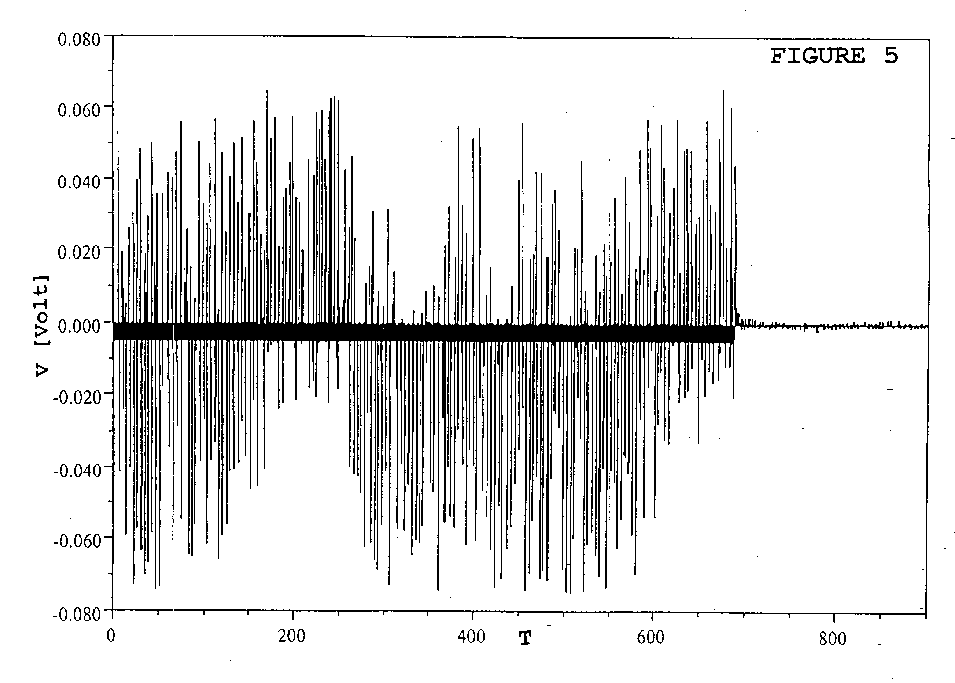

In experiment 5, a 5 volt AC source operating at 60 Hz was coupled to the input terminals A and B. Figure 5 shows that after approximately 700 touches, T, the voltage, V, measured across resistor R1 was reduced by more than fifty percent.

### Experiment 6

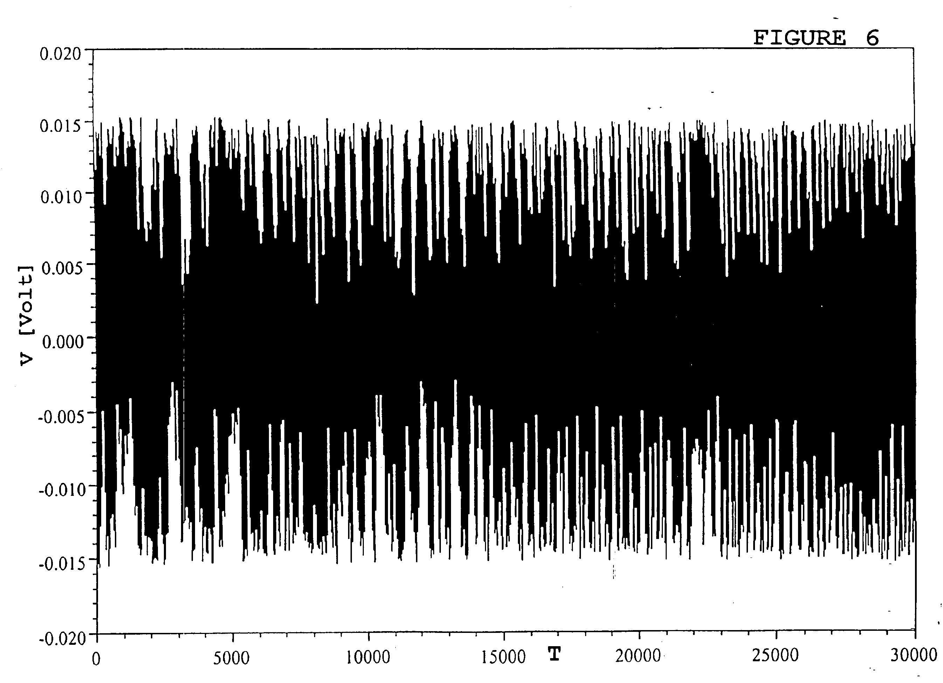

In experiment 6, the AC voltage level was reduced from 5 volts to 0.5 volts. Figure 6 shows that a fifty percent reduction in voltage, V, across resistor R1 was not measured during the entire experiment, which lasted for more than 30,000 touches, T.

This experiment showed that, reducing the AC voltage greatly increased the number of touches, T, before the system fails. These results were surprising and unexpected.

As a practitioner of ordinary skill in the art will realize, the present invention is capable of many variations, including, but not limited to, all variations of resistive touchscreens and membrane switches. All such variations to the invention come within the scope of the present invention.

## Claims

1. An electrical circuit comprising a switch (10) and a DC voltage source,
the switch (10) comprising:
a first substrate (12) having a conductive surface (18), the first substrate (12) comprising a flexible support (14) and an intrinsically conductive polymer, the polymer being a substituted or unsubstituted polythiophene, and
a second substrate (20) comprising a conductive surface (24),
the conductive surfaces (18,24) of the first and second substrates (12,20) are mutually spaced apart and face one another, such that upon touching the first substrate (12) the conductive surface thereof (18) and the conductive surface (24) of the second substrate (20) are capable of being pressed together to realize an electrical contact,
the voltage source for applying a voltage difference between the conductive surface (18) of the first substrate (12) and the conductive surface (24) of the second substrate (20),
**characterized in that** the conductive surface (18) of the first substrate (12) is connected to the negative polarity of the voltage source.

2. Electrical circuit according to claim wherein the conductive surface (18) of the first substrate (12) is the conductive surface of a conductive coating (16).

3. Electrical circuit according to claim 1 or 2, wherein the conductive surface (24) of the second substrate (20) is the conductive surface of a conductive coating (22).

4. Electrical circuit according to any of the preceding claims further comprising a plurality of spacer dots (26) disposed on the conductive surface (18) of the first substrate (12) or the conductive surface (24) of the second substrate (20).

5. Electrical circuit according to any of the preceding claims wherein the second substrate (20) and/or the first substrate (12) is transparent.

6. Electrical circuit according to any of the preceding claims wherein the first substrate (12) comprises a plastic sheet.

7. Electrical circuit according to any of the preceding claims wherein the substituted or unsubstituted polythiophene has the following formula : 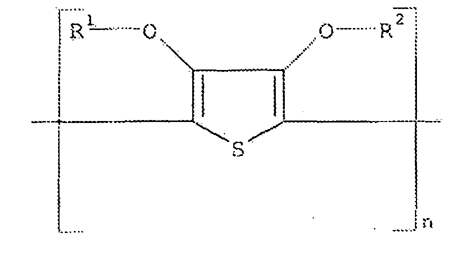 wherein n is larger than 1 and each of R¹ and H² independently represents hydrogen or an optionally substituted C₁₋₄ alkyl group or together represent an optionally substituted C₁₋₄ alkylene group or an optionally substituted cycloalkylene group, preferably an ethylene group, an optionally alkyl-substituted methylene group, an optionallyC₁₋₂ alkyl- or phenyl-substituted ethylene group, a 1,3-propylene group or a 1,2-cyclohexylene group.

8. Electrical circuit according to any of the preceding claims wherein the voltage difference is less than five volts.

9. circuit according to any of the preceding claims, wherein the voltage difference is less than three volts.

10. Electrical circuit according to any of the preceding claims wherein the voltage difference is less than one volt.

11. An electrical device comprising an electrical circuit according to any of the claims 1 to 10.

12. A touchscreen comprising an electrical circuit according to any of the claims 1 to 10.

13. A keyboard comprising an electrical circuit according to any of the claims 1 to 10.

## Patentansprüche

1. Ein elektrischer Kreis, der einen Schalter (10) und eine Wechselspannungsquelle umfasst, wobei der Schalter (10) Folgendes umfasst :
ein erstes Substrat (12) mit einer leitenden Oberfläche (18),
wobei das erste Substrat (12) einen biegsamen Träger (14) und ein eigenleitendes Polymer enthält, wobei das Polymer ein gegebenenfalls substituiertes Polythiophen ist, und
ein zweites Substrat (20), das eine leitende Oberfläche (24) umfasst,
wobei die leitenden Oberflächen (18, 24) der ersten und zweiten Substrate (12, 20) zueinander beabstandet sind und einander gegenüber liegen, wodurch die leitende Oberfläche (18) des ersten Substrats (12) und die leitende Oberfläche (24) des zweiten Substrats (20) beim gegenseitigen Berühren in der Lage sind,
zusammengedrückt zu werden und dabei einen elektrischen Kontakt herzustellen,
die Spannungsquelle zum Anlegen eines Spannungsunterschieds zwischen der leitenden Oberfläche (18) des ersten Substrats (12) und der leitenden Oberfläche (24) des zweiten Substrats (20),
**dadurch gekennzeichnet, dass** die leitende Oberfläche (18) des ersten Substrats (12) an den Minuspol der Spannungsquelle angeschlossen ist.

2. Elektrischer Kreis nach Anspruch 1, **dadurch gekennzeichnet, dass** die leitende Oberfläche (18) des ersten Substrats (12) die leitende Oberfläche einer leitenden Beschichtung (16) ist.

3. Elektrischer Kreis nach Anspruch 1 oder 2, **dadurch gekennzeichnet, dass** die leitende Oberfläche (24) des zweiten Substrats (20) die leitende Oberfläche einer leitenden Beschichtung (22) ist.

4. Elektrischer Kreis nach einem der vorstehenden Ansprüche, der ferner eine Vielzahl von Abstandshaltern (spacer dots) (26), die auf der leitenden Oberfläche (18) des ersten Substrats (12) oder der leitenden Oberfläche (24) des zweiten Substrats (20) angeordnet sind, umfasst.

5. Elektrischer Kreis nach einem der vorstehenden Ansprüche, **dadurch gekennzeichnet, dass** das zweite Substrat (20) und/oder das erste Substrat (12) transparent ist (sind).

6. Elektrischer Kreis nach einem der vorstehenden Ansprüche, **dadurch gekennzeichnet, dass** das erste Substrat (12) eine Kunststofffolie umfasst.

7. Elektrischer Kreis nach einem der vorstehenden Ansprüche, **dadurch gekennzeichnet, dass** das gegebenenfalls substituierte Polythiophen folgender Formel entspricht : 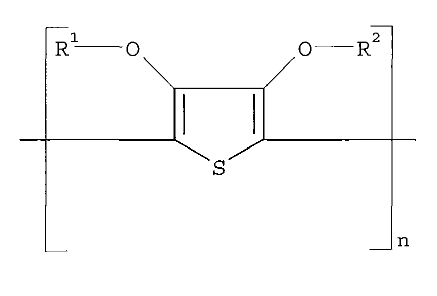 in der n > 1 und R¹ und R² unabhängig voneinander jeweils ein Wasserstoffatom oder eine gegebenenfalls substituierte C₁₋₄-Alkylgruppe bedeuten oder zusammen eine gegebenenfalls substituierte C₁₋₄-Alkylengruppe oder eine gegebenenfalls substituierte Cycloalkylengruppe, vorzugsweise eine Ethylengruppe, eine gegebenenfalls alkylsubstituierte Methylengruppe, eine gegebenenfalls C₁₋₁₂-alkylsubstituierte oder phenylsubstituierte Ethylengruppe, eine 1,3-Propylengruppe oder eine 1,2-Cyclohexylengruppe bedeuten.

8. Elektrischer Kreis nach einem der vorstehenden Ansprüche, **dadurch gekennzeichnet, dass** der Spannungsunterschied weniger als 5 V beträgt.

9. Elektrischer Kreis nach einem der vorstehenden Ansprüche, **dadurch gekennzeichnet, dass** der Spannungsunterschied weniger als 3 V beträgt.

10. Elektrischer Kreis nach einem der vorstehenden Ansprüche, **dadurch gekennzeichnet, dass** der Spannungsunterschied weniger als 1 V beträgt.

11. Ein elektrisches Gerät, das einen elektrischen Kreis nach einem der Ansprüche 1 bis 10 umfasst.

12. Ein Touchscreen, das einen elektrischen Kreis nach einem der Ansprüche 1 bis 10 umfasst.

13. Eine Tastatur, die einen elektrischen Kreis nach einem der Ansprüche 1 bis 10 umfasst.

## Revendications

1. Un circuit électrique comprenant un commutateur (10) et une source de tension alternative, ledit commutateur (10) comprenant
un premier substrat (12) comprenant une surface conductrice (18), ledit premier substrat (12) comprenant un support flexible (14) et un polymère intrinsèquement conducteur, ledit polymère étant un polythiophène éventuellement substitué, et
un second substrat (20) comprenant une surface conductrice (24), lesdites surfaces conductrices (18, 24) des premier et second substrats (12, 20) étant espacées entre eux et étant situées face à face de façon à ce que, lors de leur entrée en contact, la surface conductrice (18) du premier substrat (12) et la surface conductrice (24) du second substrat (20) sont capables d'être pressées l'une contre l'autre afin de réaliser ainsi un contact électrique,
la source de tension servant à appliquer une différence de tension entre la surface conductrice (18) du premier substrat (12) et la surface conductrice (24) du second substrat (20), **caractérisé en ce que** la surface conductrice (18) du premier substrat (12) est connectée au pôle négatif de la source de tension.

2. Circuit électrique selon la revendication 1, **caractérisé en ce que** la surface conductrice (18) du premier substrat (12) est la surface conductrice d'un revêtement conducteur (16).

3. Circuit électrique selon la revendication 1 ou 2, **caractérisé en ce que** la surface conductrice (24) du second substrat (20) est la surface conductrice d'un revêtement conducteur (22).

4. Circuit électrique selon l'une quelconque des revendications précédentes, comprenant en outre une multitude d'espaceurs (spacer dots) (26) disposés sur la surface conductrice (18) du premier substrat (12) ou la surface conductrice (24) du second substrat (20).

5. Circuit électrique selon l'une quelconque des revendications précédentes, **caractérisé en ce que** le second substrat (20) et/ou le premier substrat (12) est (sont) transparent(s).

6. Circuit électrique selon l'une quelconque des revendications précédentes, **caractérisé en ce que** le premier substrat (12) comprend une feuille en matière plastique.

7. Circuit électrique selon l'une quelconque des revendications précédentes, **caractérisé en ce que** le polythiophène éventuellement substitué correspond à la formule ci-après : 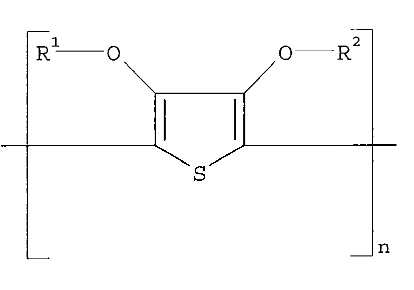 où n > 1 et R¹ et R² représentent chacun, indépendamment l'un de l'autre, un atome d'hydrogène ou un groupe alkyle en C₁₋₄ éventuellement substitué ou représentent ensemble un groupe alkylène en C₁₋₄ éventuellement substitué ou un groupe cycloalkylène éventuellement substitué, de préférence un groupe éthylène, un groupe méthylène éventuellement alkyl-substitué, un groupe éthylène éventuellement C₁₋₁₂-alkyl-substitué ou phényl-substitué, un groupe 1,3-propylène ou un groupe 1,2-cyclohexylène.

8. Circuit électrique selon l'une quelconque des revendications précédentes, **caractérisé en ce que** la différence de tension est inférieure à 5 V.

9. Circuit électrique selon l'une quelconque des revendications précédentes, **caractérisé en ce que** la différence de tension est inférieure à 3 V.

10. Circuit électrique selon l'une quelconque des revendications précédentes, **caractérisé en ce que** la différence de tension est inférieure à 1 V.

11. Un appareil électrique comprenant un circuit électrique selon l'une quelconque des revendications 1 à 10.

12. Un écran tactile comprenant un circuit électrique selon l'une quelconque des revendications 1 à 10.

13. Un clavier comprenant un circuit électrique selon l'une quelconque des revendications 1 à 10.
